# EUROPEAN PATENT APPLICATION

(11) **EP 0 922 874 A1**
(43) Date of publication of application: **16.06.1999**
(21) Application number: 98123074.1
(22) Date of filing: 10.12.1998
(51) Int. Cl.: F16D 43/202

(54) **Torque limiting apparatus**

(30) Priority: 12.12.1997 JP 34285397; 01.04.1998 JP 8901498
(71) Applicant: Kabushiki Kaisha Toyoda Jidoshokki Seisakusho, Aichi-ken 448-8671 (JP)
(72) Inventor: Kimura, Kazuya, Kariya-shi, Aichi-ken (JP); Okada, Masahiko, Kariya-shi, Aichi-ken (JP); Uryu, Akifumi, Kariya-shi, Aichi-ken (JP)
(74) Representative: Hoeger, Stellrecht & Partner

(57) **Abstract**

A torque limiting apparatus is constituted by a spiral spring or coil spring (46) torsionally movable in response to a relative rotation between input and output (16,41) under torque loading the spiral spring (46) being elastically deformed and assembled so that an end (47) thereof is elastically urged toward a position where it is disengaged from a spring catcher (43). A projection or pin (48a) comes into contact with a portion of the spiral spring (46) to disengage the end (47) of the spiral spring (46) from the spring catcher (43) and thereby interrupt torque transmission when the torque exceeds a predetermined limit.

## Description

### BACKGROUND OF THE INVENTION

### 1. Field of the Invention

The present invention relates to a drive power transmission apparatus disconnectably connecting a first rotating element on a drive source side with a second rotating element on a drive-power-receiving side for transmitting a drive power from the first rotating element to the second rotating element. More particularly, the present invention relates to a drive power transmission apparatus arranged between a vehicle engine and a refrigerant compressor of a vehicle refrigerating system and accommodating therein a transmission-interrupting means for interrupting the transmission of a drive power from the vehicle engine to the refrigerant compressor to stop the operation of the refrigerant compressor, when an excessive load appears in the compressor due to an unpredictable trouble, to eventually disconnect the excessive load from the side of the drive power source.

### 2. Description of the Related Art

Japanese Unexamined Patent Publication (Kokai) No. 8-159028 discloses a typical drive power transmission apparatus incorporated in an outer end portion of a drive shaft of a clutchless type refrigerant compressor, i.e., a drive-power-receiving unit, to receive a rotational drive power from a vehicle engine, i.e., a drive power source. More specifically, the conventional drive power transmission apparatus includes a drive-power-receiving element connected to the outer end of the drive shaft of the refrigerant compressor (the drive-power-receiving unit), and a rotor element connected to the vehicle engine (the drive power source) via a power transmission belt. The drive power transmission apparatus further includes a plurality of rolling ball elements interposed between the rotor element and the drive-power-receiving element and arranged to be coaxial with and spaced from the axis of rotation of the drive shaft of the refrigerant compressor. Each of the rolling ball elements is normally seated in a pair of ball-holding recesses formed in the confronting end faces of the drive-power-receiving element and the rotor element. The rotor element is constantly and elastically urged toward the drive-power-receiving element by a preloading spring. Therefore, the rotational drive power of the rotor element is transmitted to the drive shaft of the refrigerant compressor via the rolling ball elements held in the ball-holding recesses and the drive-power-receiving element. When a load torque appearing in the drive-power-receiving unit, i.e., the refrigerant compressor increases to over a predetermined limiting torque, the ball elements are disengaged from the ball-holding recesses of the rotor element to result in interrupting the transmission of a drive power from the rotor element to the drive-power-receiving element. Accordingly, a load torque over the predetermined limiting torque is not applied to the rotor element.

Nevertheless, in the described conventional drive power transmission apparatus, since the ball elements interposed between the rotor element and the drive-power-receiving element are arranged to be radially spaced from the axis of rotation of the drive shaft and the rotor element, a centrifugal force acts on the ball elements during the rotation of the rotor element. Further, when the rotation at speed of the rotor element increases, the centrifugal force acting on the ball elements increases. As a result, the rolling ball elements are unpredictably disengaged by the centrifugal force from the ball-holding recesses of the rotor element and the drive-power-receiving element before the load torque increases to the predetermined limiting torque. Namely, even if a load torque appearing in the drive-power-receiving unit (the refrigerant compressor) is smaller than the predetermined limiting torque, the transmission of a drive power from the rotor element on the drive power source to the drive-power-receiving element on the drive-power-receiving unit might be undesirably interrupted.

Further, the predetermined limiting torque at which the interruption of transmission of a drive power occurs to prevent a large load torque from being transferred from the drive-power-receiving unit to the drive power source is determined by a frictional force acting between the rolling ball elements and the ball-holding recesses of the rotor element, and the elastic urging force exhibited by the preloading spring. However, the former frictional force changes depending on the coefficient of friction between the rolling ball elements and the ball-holding recesses of the rotor element, and it is difficult to adjustably set the coefficient of friction at a desired value. Thus, the interrupting function to interrupt transmission of a drive power from the side of the drive power source to the side of the drive-power-receiving unit, for the sake of preventing transfer of an excessive load torque from the drive-power-receiving unit to the drive power source, cannot be stable.

### SUMMARY OF THE INVENTION

Therefore, an object of the present invention is to obviate the defects encountered by the conventional drive power transmission apparatus.

Another object of the present invention is to provide a drive power transmission apparatus arranged between a drive power source and a drive-power-receiving unit for transmitting a rotational drive power from the side of the drive power source to the side of the drive-power-receiving unit, and stably exhibiting a function to interrupt the transmission of the rotational drive power in response to an excessive increase in a load torque appearing in the drive-power-receiving unit over a predetermined limiting torque.

A further object of the present invention is to provide a drive power transmission apparatus arranged between a drive power source and a drive-power-receiving unit and provided with means for preventing an unpredictable interruption of transmission of a rotational drive power from the drive power source to the drive-power-receiving unit during high-speed rotation of the drive-power-receiving unit.

In accordance with the present invention, there is provided a drive power transmission apparatus for detachably connecting a first rotating element connected to a drive power source with a second rotating element connected to a drive-power-receiving unit to transmit a drive power from the first rotating element to the second rotating element, comprising:
a first connecting member incorporated in one of the first and second rotating elements;
a second connecting member incorporated in the other of the first and second rotating elements, the second connecting member permitting the first connecting member to be detachably engaged therewith;
an elastic means arranged between the first and second rotating elements to be torsionally moved by a load torque appearing in the drive-power-receiving unit during transmission of the drive power to thereby permit a relative rotation between the first and second rotating elements;
an urging means for exhibiting a force to urge the first connecting member toward a position where when the first connecting member is detached from the second connecting member, the first connecting member not being permitted to be re-engaged with the second connecting member; and
means for removing the urging force of the urging means from the first connecting member in response to a relative movement between the first and second connecting members which is caused by the relative rotation between the first and second rotating elements when the load torque increases over a predetermined limiting torque.

In the described drive power transmission apparatus, the first and second rotating elements are normally connected to one another duo to the engagement of the first and second connecting members, and accordingly, a drive power is transmitted from the drive power source to the drive-power-receiving unit. During the transmission of the drive power from the drive power source to the drive-power-receiving unit, a load torque appears in the drive-power-receiving unit to cause a torsional deformation of the elastic means. Thus, the torsional deformation of the elastic means causes a relative rotation between the first and second rotating elements. When the load torque of the drive-power-receiving unit increases to more than a predetermined limiting torque, the torsional deformation of the elastic means increases and therefore, an amount of the relative rotation between the first and second rotating elements increases. Thus the urging force of the urging means is removed by a relative movement between the first and second connecting members which is produced by the operation of the removing means. Therefore, the first connecting member is moved to the position where the first connecting member cannot be re-engaged with the second connecting member, so that the first and second rotating elements are disconnected from one another. As a result, transmission of a drive power from the drive power source to the drive-power-receiving unit is interrupted so as to permit the load torque exceeding the predetermined limiting torque to disappear from the drive-power-receiving unit.

Preferably, the elastic means comprises a torsional spring having a first end engaged with the first rotating element and a second end engaged with the second rotating element.

The torsional spring may be formed to be integral with one of the first and second connecting members so that the other of the first and second connecting members is detachably engaged with the first end of the torsional spring of which the second end is arranged to be non-rotatable with respect to one of the first and second rotating elements, which incorporates therein the connecting member integral with the torsional spring.

Preferably, the torsional spring is elastically deformed and accommodated in the drive power transmission apparatus so as to concurrently function both as the urging and the elastic means.

Further preferably, the rotating element which incorporates therein the connecting member integral with the torsional spring is provided with a mechanical projection capable of functioning as the above-mentioned means for removing the urging force of the urging means. Thus, the mechanical projection is pressed against the torsional spring due to the relative rotation between the first and second rotating elements, so that the first end of the torsional spring is moved relative to the other of the first and second connecting members until the urging force of the urging means is removed, when the load torque increases over the predetermined limiting torque.

Alternatively, the above-mentioned means for removing the urging force of the urging means comprises a bridging means for providing an interconnection between first and second positions arranged in the torsional spring. The first position is arranged adjacent to the first end Of the torsional spring and a second position is arranged so as to move near to and away from the first position duo to the relative rotation of the first and second rotating elements. The bridging means functions so as not to permit a displacement of the second position toward and away from the first position due to the relative rotation of the first and second rotating elements when the load torque increases over to more than the predetermined limiting torque, so that the first end of the torsional spring is disengaged from the afore-mentioned other of the first and second connecting members so as to remove the urging force of the urging means. The second position is preferably determined as a position spaced apart from the first position in a direction in which the first end of the torsional spring is moved. Then, the bridging means has means for allowing the first and second positions to make a change in a distance therebetween at either a connecting portion thereof at which the bridging means is connected to one of the first and second positions or a middle portion of the bridging means per se.

The bridging means may comprise a wire member preferably made of a metallic wire.

Alternatively, the bridging means may comprise a plate member.

Further, the afore-mentioned torsional spring may comprise a spiral spring element.

Alternatively, the torsional spring may comprise a coil spring element.

Further, the elastic means may comprise a plurality of torsional springs having first ends thereof arranged equidistantly around said first and second rotating elements and second ends thereof also arranged equidistantly around said first and second rotating elements. The first ends of the plurality of torsional springs are arranged to be detachably engaged with the afore-mentioned other of the first and second connecting members, and the second ends of the plurality of torsional springs are arranged to be non-rotatable with respect to one of the first and second rotating elements, which incorporates therein the connecting member integral with the torsional springs.

### BRIEF DESCRIPTION OF THE DRAWINGS

The above and other objects, features and advantages of the present invention will be made more apparent from the ensuing description of preferred embodiments with reference to the accompanying drawings wherein:
Fig. 1 is a longitudinal cross-sectional view of a clutchless-type refrigerant compressor in which a drive power transmission apparatus according to an embodiment of the present invention is incorporated;
Fig. 2 is a cross-sectional view taken along the line A-A of Fig. 1;
Fig. 3 is a partial and enlarged view of a part of the drive power transmission apparatus of Fig. 1, illustrating a state where an end of a spiral spring is disengaged from an associated catching element to establish an interruption of transmission of a drive power;
Fig. 4 is a cross-sectional view of the drive power transmission apparatus of Fig. 1, illustrating a state where transmission of a drive power is interrupted;
Fig. 5 is a cross-sectional view of a drive power transmission apparatus according to a second embodiment of the present invention;
Fig. 6 is a front view, taken along the line VI-VI of Fig. 5, of a pulley assembly of the drive power transmission apparatus;
Fig. 7 is a partial enlarged view of a part of the drive power transmission apparatus of Fig. 5, illustrating a state where transmission of a drive power is interrupted;
Fig. 8 is a cross-sectional view of the drive power transmission apparatus of Fig. 5, illustrating a state where transmission of a drive power is interrupted;
Fig. 9 is a cross-sectional view of a drive power transmission apparatus according to a third embodiment of the present invention;
Fig. 10 is a cross-sectional view of the drive power transmission apparatus of Fig. 9, illustrating a state where transmission of a drive power is interrupted;
Fig. 11 is a front view of a pulley assembly of the drive power transmission apparatus of Fig. 9;
Fig. 12A is a cross-sectional view taken along the line B-B of Fig. 11;
Fig. 12B is a partial enlarged view of the drive power transmission apparatus of Fig. 9, illustrating a state where transmission of a drive power is interrupted;
Fig. 13 is a cross-sectional view of a pulley assembly incorporated in a drive power transmission apparatus according to a fourth embodiment of the present invention;
Fig. 14 is a cross-sectional view of a pulley assembly incorporated in a drive power transmission apparatus according to a fifth embodiment of the present invention;
Fig. 15 is an enlarged partial view of a drive power transmission apparatus according to a modification of the first embodiment of the present invention, and;
Fig. 16 is an enlarged partial view of a drive power transmission apparatus according to a modification of the fourth embodiment of the present invention.

### DESCRIPTION OF THE PREFERRED EMBODIMENTS

### (The First Embodiment)

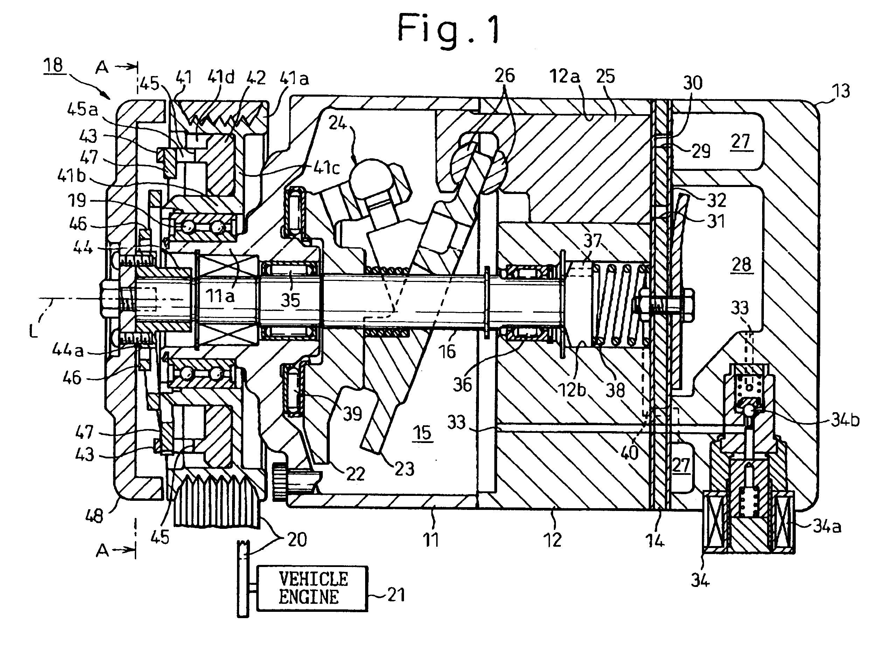

The description of the first embodiment of the present invention will be provided hereinbelow with reference to Figs. 1 through 4. It should be understood that the drive power transmission apparatus according to the first embodiment is incorporated in a variable capacity type refrigerant compressor to function as a belt-pulley type transmission apparatus capable of exhibiting a torque limiting ability.

Referring to Fig. 1, the variable capacity refrigerant compressor,includes a front housing 11, a cylinder block 12, and a rear housing 13 which constitute a housing assembly of the compressor. The front housing 11 is fixedly connected to a front end of the cylinder block 12, and the rear housing 13 is fixedly connected to a rear end of the cylinder block 12 via a valve plate assembly 14. The housing assembly defines a crank chamber 15 in an interior formed between the front housing 11 and the cylinder block 12. A drive shaft 16 is supported by the housing assembly to be rotatable in the crank chamber 15 between the front housing 11 and the cylinder block 12. Namely, the drive shaft 16 axially extends through the crank chamber 15. The drive shaft 16 has a front portion rotatably supported by a radial bearing 35 seated in the front housing 11, and a rear portion rotatably supported by a radial bearing 36. The rear portion of the drive shaft 16 extends into a central receiving bore 12b formed centrally in the cylinder block 12. Within the central receiving bore 12b of the cylinder block 12, there are provided a thrust bearing 37 and a coil spring 38. The thrust bearing 37 and the coil spring 38 are disposed between the rear end of the drive shaft 16 and the valve plate assembly 14, and the coil spring 38 urges the drive shaft 16 in a frontward direction via the thrust bearing 37 which prevents the rotation of the drive shaft 16 from being transmitted to the coil spring 38.

The end of the front portion of the drive shaft 16, i.e., the front end of the drive shaft 16, extends outward through a front wall of the front housing 11. The front housing 11 has a central boss portion 11a axially projecting frontward from the body of the front housing 11, and surrounds the front portion of the drive shaft 16.

A belt-pulley type transmission apparatus 18 constitutes a drive power transmission apparatus capable of exhibiting a torque limiting ability. The belt-pulley type transmission apparatus 18 is rotatably mounted around the central boss portion 11a of the front housing 11 via an angular-type bearing 19 and is fixedly connected to the frontmost end of the drive shaft 16. The belt-pulley type transmission apparatus 18 is operatively connected, via a transmission belt 20, to a vehicle engine 21 forming a drive power source for the refrigerant compressor. Namely, the belt-pulley type transmission apparatus 18 is directly connected to the vehicle engine 21 without the interposition of a clutch unit such as a conventional solenoid clutch. Therefore, when the vehicle engine is in operation, the drive shaft 16 of the refrigerant compressor is constantly rotationally driven by the vehicle engine 21 via the transmission belt 20 and the belt-pulley type transmission apparatus 18.

A rotary support element 22 is fixedly mounted on the drive shaft 16 to be rotated together with the drive shaft 16 within the crank chamber 15 of the refrigerant compressor. A swash plate element 23 is tiltably supported on the drive shaft 16. A hinge unit 24 is arranged between the rotary support element 22 and the swash plate element 23, so that the swash plate element 23 is permitted to perform a controlled movement to change its inclination with respect to a plane perpendicular to the axis of rotation of the drive shaft 16 via the hinge action of the hinge unit 24.

The cylinder block 12 of the housing assembly is provided with a plurality of axial cylinder bores 12a arranged equiangularly around the axis of rotation of the drive shaft 16 so as to receive a plurality of single-headed compressing pistons 25. The plurality of single-headed pistons 25 are slidable in the respective cylinder bores 12a in an axial direction parallel to the axis of rotation of the drive shaft 16. The respective single-headed pistons 25 are engaged with an outer peripheral portion of the swash plate element 23 via spherical shoes 26, and therefore, the rotation of the drive shaft 16 and the swash plate element 23 causes a reciprocating movement of the pistons 25 in the respective cylinder bores 12a via the rolling motion of the shoes 26. The reciprocating stroke length of each of the pistons 25 is changed in response to a change in the angle of inclination of the swash plate element 23.

The rear housing 13 of the housing assembly is provided with a suction chamber 27 and a discharge chamber 28 formed therein. The suction chamber 27 and the discharge chamber 28 are fluidly separated from one another by an appropriate sealing means.

The suction chamber 27 is arranged to receive therein a refrigerant gas before compression, and the discharge chamber 28 is arranged to receive the refrigerant gas after compression. Therefore, the suction chamber 27 fluidly communicates with the respective cylinder bores 12a via suction ports 29 and suction valves 30 provided for the valve plate assembly 14, and the discharge chamber 28 fluidly communicates with the same respective cylinder bores 12a via discharge ports 31 and discharge valves 32 provided for the same valve plate assembly 14. The refrigerant gas before compression is sucked into the respective cylinder bores 12a due to the reciprocation of the respective pistons 25 via the respective suction ports 27 which are opened and closed by the suction valves 30. When the refrigerant gas is compressed in the respective cylinder bores 12a by the single-headed pistons 25, the compressed refrigerant gas having an increased pressure is discharged from the respective cylinder bores 12a into the discharge chamber 28 via the respective discharge ports 31 which are opened and closed by the respective discharge valves 32.

A thrust bearing 39 is interposed between the rotary support element 22 and an inner end face of the front housing 11 to support a thrust force acting on the rotary support element 22, via the pistons 25 and the swash plate element 23, during the compression of the refrigerant gas.

A gas supply passage 33 is formed in the cylinder block 12, the rear housing 13 and the valve plate assembly 14 so as to provide a fluid communication between the crank chamber 15 and the discharge chamber 28. Similarly, a gas exhaust passage 40 is formed in the cylinder block 12, the rear housing 13 and the valve plate assembly 14 so as to provide a fluid communication between the crank chamber 15 and the suction chamber 27.

A capacity control valve 34 is arranged in a portion of the gas supply passage 33 so as to control the fluid communication between the crank chamber 15 and the discharge chamber 28 via the gas supply passage 33. The capacity control valve 34 is constituted by a solenoid valve which includes a solenoid 34a electrically energized and de-energized so as to electro-magnetically move a valve element 34b in the shape of a ball valve. The movement of the valve element 34b changes the amount of opening of a part of the gas supply passage 33 and, accordingly, the amount of opening of the gas supply passage 33 can be adjusted by the capacity control valve 34. Thus, an amount of supply of the refrigerant gas at a high pressure from the discharge chamber 28 into the crank chamber 15 can be adjusted. Therefore, a pressure prevailing in the crank chamber 15 is adjustably changed in relation to an extraction of the refrigerant gas from the crank chamber 15 into the suction chamber 27 via the gas exhaust passage 40. When the pressure prevailing in the crank chamber 15 is adjustably changed, a pressure differential between the pressure in the crank chamber 15 and a total pressure in the plurality of cylinder bores 12a acting on the respective pistons 25 changes so as to forcedly change the angle of inclination of the swash plate element 23. Accordingly, the stroke of the respective pistons 25 is adjustably changed to control the discharge capacity of the refrigerant compressor.

The description of the belt-pulley transmission apparatus 18 forming a drive power transmission apparatus according to the first embodiment of the present invention will be provided hereinbelow.

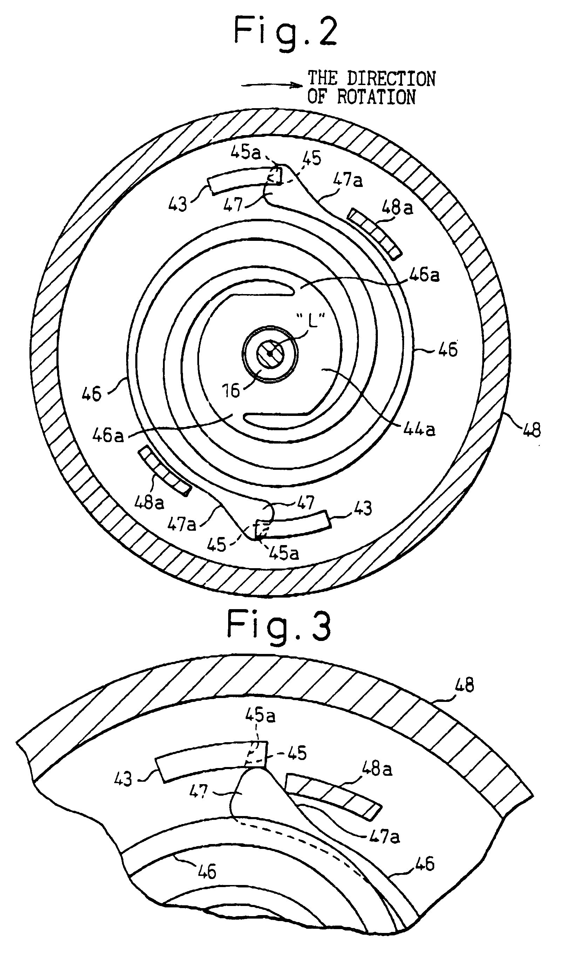

As shown in Figs. 1 and 2, the belt-pulley type transmission apparatus includes a rotor element 41 which has an outer cylindrical belt-receiving member 41a, an inner cylindrical member 41b coaxial with the outer cylindrical belt-receiving member 41a, and an annular rib member 41c provided for connecting the outer cylindrical belt-receiving member 41a and the inner cylindrical member 41b. The rotor element 41 is mounted on the outer race of the angular-type bearing 19 via the inner cylindrical member 41b, and receives a transmission belt 20 wound around the outer belt-receiving member 41a. The transmission belt 21 is connected to a vehicle engine 21 to transmit a drive power from the vehicle engine 21 to the rotor element 41.

The rotor element 41 is provided with an annular chamber 41d defined between the outer belt-receiving member 41a, the inner cylindrical member 41b and the annular rib member 41c, and opens frontward.

The belt-pulley type transmission apparatus 18 further includes a atop element 42 in the form of a ring member. The stop member 42 is received in the annular chamber 41d of the rotor element 41 and is fixedly connected to the annular rib member 41c to be coaxial with the rotor element 41. The stop member 42 is provided for forming a second connecting member as described later, and is rotated together with the rotor element 41. The rotor element 41 and the stop member 42 form a first rotating element as described in the accompanying claims. As best shown in Fig. 2, two spring catchers 43 having the shape of two elongated separate projections projecting axially are arranged in a front face of the stop member 42 so that the two spring catchers 43 are spaced 180 degrees from one another around a central axis "L" of the belt-pulley type transmission apparatus 18 coaxial with the axis of rotation of the drive shaft 16. Each of the spring catchers 43 is provided with an engaging recess 45 recessed circumferentially in a front end thereof with respect to the rotating direction of the belt-pulley type transmission apparatus 18 as shown by an arrow in Fig. 2. Thus, each engaging recess 45 of each of the spring catchers 43 opens radially with respect to the central axis "L" of the belt-pulley type transmission apparatus 18, but is closed in the axial direction of the apparatus 18. The engaging recess 45 is provided with an engaging end face 45a at its innermost end formed as an inclined face inclining from a radial direction toward a direction corresponding to the rotating direction of the belt-pulley type transmission apparatus 18.

A flanged bush element 44 is fixedly mounted on the drive shaft 16 so that it is fitted around a frontmost end of the drive shaft 16. The flanged bush 44 has an integral flange portion 44a in the shape of a substantially circular plate attached to a frontmost end thereof.

A spiral spring 46 is formed as a spring moving in a torsional direction, and is provided as an elastic means and a first connecting member, as claimed in the accompanying claims. The spiral spring 46 is formed as an integral element with the flange portion 44a of the flanged bush element 44. The spiral spring 46 has a rectangular or square cross-section and extends spirally from an outer end 47 thereof toward an inner end 46a thereof through an angle of substantially 360 degrees, and the cross section of the spiral spring 46 changes so that a portion of the spring 46 spaced apart substantially 180 degrees from the outer end 47 has a largest cross section. In the described embodiment, a pair of spiral springs 46 are incorporated to be integral with the flange portion 44a of the flanged bush element 44, and are positioned so that springs 46 are circumferentially shifted 180 degrees from one another. Therefore, each of the pair of spiral springs 46 has the outer end 47 forming a first end and the inner end 46a forming a second end, and the first ends (the outer ends 47) of the two spiral springs 46 are spaced apart substantially 180 degrees from one another about the axis "L". Similarly, the second ends (the inner ends 46a) of the two spiral are spaced apart substantially 180 degrees from one another about the axis "L". Each outer end 47 of each of the spiral springs 46 is provided with an outer curved face portion 47a formed so as to slope down from the endmost position of the outer end 47 in a direction corresponding to the rotating direction of the belt-pulley type transmission apparatus 18. The outer end 47 of the spiral spring 46 is engaged in the engaging recess 45 of the associated one of the spring catchers 43 so that the end face of the outer end 47 is in contact with the engaging end face 45a. The contact-engagement of each spiral spring 46 with the spring catcher 43 of the ring-shape stop member 42 permits transmission of a drive power from the side of the rotor element 41 to the drive shaft 16 via the flanged bush member 44.

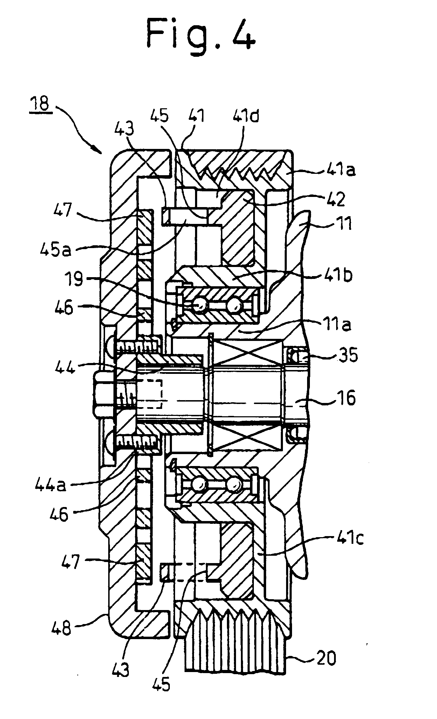

At this stage, it should be noted that when the spiral springs 46 are left free as shown in Fig. 4 before completion of assembling of the belt-pulley type transmission apparatus 18 onto the frontmost end of the drive shaft 16, the spiral springs 46 remain flat. Namely, the outer ends 47 of the spiral springs 46 are disengaged from the engaging recesses 45 of the spring catchers 43, and stay at a position located front side of the respective spring catchers 43. When the belt-pulley type transmission apparatus 18 is assembled onto the frontmost end of the drive shaft 16 as shown in Figs. 1 and 2, the spiral springs 46 are elastically deformed in a conical shape. Thus, the outer ends 47 of the two spiral springs 46 are moved rearward with respect to the flange portion 44a of the flanged bush member 44 so as to be engaged into the engaging recesses 45 of the spring catchers 43. When the spiral springs 46 are engaged into the spring catchers 43 of the stop member 42, the spiral springs 46 exhibit an elastic force, respectively, so that the spiral springs 46 resiliently urge the outer ends 47 thereof toward a position in a detachable contact with the associated engaging end faces 45a of the engaging recesses 45. Namely, when assembled, the spiral springs 46 constitute an urging means as described in the accompanying claims.

A disconnecting plate 48 having a cylindrical outer end is fixed to the frontmost end of the drive shaft 16 at a position on the front side of the spiral springs 46. Thus, the disconnecting plate 48 is rotated together with the drive shaft 16 and the flanged bush member 44 integral with the spiral springs 46. A combination of the disconnecting plate 48, the drive shaft 16 and the flanged bush member 44 constitute a second rotating element as stated in the accompanying claims.

The disconnecting plate 48 is provided with circularly elongated projections 48a formed in an inner face thereof. The circularly elongated projections 48a project axially rearward from the inner face of the disconnecting plate 48 and function as a removing means for removing an urging force acting on the outer ends 47 of the spiral springs 46 when a later-described predetermined operating condition is achieved. It should be noted that a pair of elongated projections 48a are arranged so as to be spaced 180 degrees from one another about the axis "L". Each of the elongated projections 48a of the disconnecting plate 48 is provided with an innermost end located inside the annular chamber 41d of the rotor element 41. Further, the elongated projections 48a and the two outer ends 47 of the pair of spiral springs 46 lie in a common circle having a center thereof located on the axis "L" of the rotor element 41. Furthermore, the elongated projections 48a of the disconnecting plate 48 are arranged radially inside the spring catchers 43, with respect to the axis "L" of the rotor element 41. Further, the disconnecting plate 48 is fixed to the drive shaft 16 by a screw bolt in a manner such that the position of each elongated projection 48a is shifted circumferentially, by a predetermined space, from the spring catchers 43 and the outer ends 47 of the spiral springs 46 in a direction corresponding to the rotating direction of the rotor element 41 shown by an arrow in Fig. 2.

The operation of the belt-pulley type transmission apparatus 18 will be described hereinbelow.

A drive power is transmitted from the vehicle engine 21 to the drive shaft 16 of the refrigerant compressor via the transmission belt 20, the rotor element 41, the stop member 42, the spiral springs 46 and the flanged bush member 44. When the drive power is transmitted to the drive shaft 16, a load torque appearing in the refrigerant compressor and acting on the drive shaft 16 in a direction reverse to the rotating direction of the drive shaft 16. Thus, the spiral springs 46 are torsionally deformed by the load torque. Therefore, a relative rotation appears between the rotor element 41 and the drive shaft 16 so that the rotor element 41 is shifted with respect to the drive shaft 16 in a direction the same as the rotating direction of the drive shaft 16. Accordingly, the outer ends 47 of the spiral springs 46 and the spring catchers 43 of the annular stop member 42 are shifted toward the associated elongated projections 48a of the disconnecting plate 48.

When the load torque acting on the drive shaft 16 is less than a predetermined limiting torque, the amount of torsional deformation of the spiral springs 46 is small, and accordingly, the amount of relative rotation of the rotor element 41 and the drive shaft 16 is small. Thus, the outer ends 47 of the spiral springs 46 are not shifted so far as they come into contact with the elongated projections 48a of the disconnecting plate 48. Therefore, the engagement of the spiral springs 46 and the spring catchers 43 of the stop member 42 is maintained. Accordingly, a drive power can be transmitted from the vehicle engine 21 to the drive shaft 16 of the refrigerant compressor, and the load torque below the predetermined limiting torque appearing in the refrigerant compressor is reduced by the torsional deforming of the spiral springs 46.

On the other hand, when a load torque appearing in the refrigerant compressor exceeds the predetermined limiting torque due to an unpredictable cause, the load torque which should be referred to as an excessive load torque causes an increase in the torsional deforming of the spiral springs 46 to result in an increase in an amount of relative rotation of the rotor element 41 and the drive shaft 16. Therefore, in response to the increase in the amount of relative rotation between the rotor element 41 and the drive shaft 16, the outer ends 47 of the spiral springs 46 are brought into a press-contact with the elongated projections 48a of the disconnecting plate 48 via the outer curved face portion 47a of the spiral springs 46. Thus, the outer ends 47 of the spiral springs 46 are gradually bent radially inward under guidance of the engaging end faces 45a of the engaging recesses 45 and the outer curved face portion 47a of the spiral springs 46 per se. Thus, the outer ends 47 of the spiral springs 46 are gradually inwardly moved along the engaging end faces 45a of the engaging recesses 45, and are eventually disengaged from the engaging recesses 45 to take a detached position shown in Fig. 3. Due to the disengagement of the outer ends of the spiral springs 46 from the engaging recesses 45 the spiral springs 46 are restored to the flat state thereof as shown in Fig. 4. Namely, the outer ends 47 of the spiral springs 46 are moved to the position located on the front side of the spring catchers 43. Thus, the spiral springs 46 come out of the press-contact with the elongated projections 48a of the disconnecting plate 48 so that the outer ends 47 of the spiral springs 46 are allowed to move radially outward. Nevertheless, since the outer ends 47 of the spiral springs 46 are axially shifted from the spring catchers 43, the radially outward movement of the outer ends 47 of the spiral springs 46 does not permit the springs 46 to be re-engaged with the spring catchers 43. Therefore, the spiral springs 46 are completely disengaged and detached from the annular stop member 42 to disconnect the rotor element 41 from the drive shaft 16. Namely, transmission of a drive power from the vehicle engine 21 to the drive shaft 16 of the refrigerant compressor is interrupted, so that the excessive load torque exceeding the predetermined limiting torque disappears. Thus, the vehicle engine 21 is not adversely affected by the excessive load torque appearing in the refrigerant compressor.

The diverse advantages gained from the above-described first embodiment of the present invention are described below.
(1) In the belt-pulley type transmission apparatus 18 incorporated in the frontmost portion of a drive shaft of a refrigerant compressor, a centrifugal force due to the rotation of the transmission apparatus 18 does not act on the spiral springs 46 comprised of a torsion spring. Namely, the torsional movement of the spiral springs 46 is not caused by the centrifugal force acting on the spiral springs 46. Therefore, even when the transmission apparatus 18 is rotated at a high speed, unpredictable interruption of transmission of a drive power from a vehicle engine to the drive shaft of the refrigerant compressor can be prevented.
   Further, since the interruption of transmission of a drive power occurs when a load torque exceeds a predetermined limiting torque which can be determined by selectively determining the torsional resilience of the spiral springs 46 and by selectively setting a distance between the outer curved face portion 47a of the outer end 47 of the spiral spring 46 and the associated elongated projection 48a of the disconnecting plate 48, the interrupting operation of the belt-pulley type transmission apparatus 18 can be accurate and reliable, compared with the prior art in which the determination of the limiting torque for a load torque must be adversely affected by a change in a frictional force among various elements of the conventional drive power transmission apparatus.
(2) Further, in the designing and fabricating of the spiral spring 46, the amount of torsional movement of the spiral spring 46 caused by a unit torque can be easily and accurately determined. Thus, the performance of the belt-pulley type transmission apparatus 18 incorporating therein the spiral spring 46 as an indispensable element can be accurate and stable.
(3) Since the spiral spring 46 is assembled in the transmission apparatus after being elastically moved, it can function as both elastic and urging means in the belt-pulley type transmission apparatus 18. Accordingly, the belt-pulley type transmission apparatus 18 can be produced by a relatively small number of parts and elements. Thus, the manufacturing cost can be low, and the construction thereof per se can be rather simple.
(4) A plurality of spring catchers 43 are arranged equidistantly around the central axis "L" of the transmission apparatus 18 to cooperate with the corresponding number of spiral springs 46. The outer ends 47 of the respective spiral springs 46 are arranged equidistantly around the central axis "L" of the transmission apparatus 18 so as to be detachably engaged with the spring catchers 43. Further, the inner ends 46a of the respective spiral springs 46 are arranged equidistantly around the same central axis "L" and are connected to the flange portion 44a of the flanged bush member 44 at a plurality of different positions. Therefore, transmission of a drive power from the annular stop member 42 attached to the rotor element 41 to the flanged bush member 44 attached to the drive shaft 16 occurs at the plurality of different positions. Thus, the drive power in the form of a driving torque is transmitted from a drive side to a driven side. Namely, during the transmission of a drive power from the vehicle engine to the drive shaft of the refrigerant compressor, the flanged bush member 44 and the drive shaft 16 are not subjected to an undesirable force which might cause an inclination of these two elements. Accordingly, the drive shaft 16 can always be rotated stably.
(5) The annular stop member 42 of the belt-pulley type transmission apparatus 18 functioning as a torque limiting means is accommodated in an annular chamber 41d formed in the rotor element 41. Therefore, the assembly of the rotor element 41 and the stop member 42 can be axially short to resultingly reduce an axial overall length of the belt-pulley type transmission apparatus 18. Therefore, when the transmission apparatus 18 is incorporated in a refrigerant compressor, the assembly of the transmission apparatus 18 and the compressor can be very compact.
(6) Each of the spiral springs 46 having the inner and outer ends 46a and 47 has a gradually changing cross-section, and an intermediate portion of the spiral spring 46 has a cross-section which is larger than that of the other portions between the inner and outer ends 46a and 47. Namely, the spiral spring 46 is formed to have an increased cross-section at a specified portion thereof where a large stress acts during the transmission of a drive torque. Thus, the spiral spring 46 is formed so that a stress is evenly distributed over an entire spirally extending portion of each spiral spring 46 when the spiral spring 46 is torsionally moved. Consequently, a space occupied by the spiral spring 46 within the annular chamber 41d can be small to reduce the entire size of the rotor element 41. As a result, the belt-pulley type transmission apparatus 18 can be small in size.
(7) Since the engaging end face 45a of the engaging recess 45 of the spring catcher 43 is formed to be outwardly inclined in the rotating direction of the rotor element 41 with respect to a radial direction of the annular stop member 42, the outer end 47 of the spiral spring 46 can be smoothly moved inwardly under the guidance of the inclined engaging end face 45a of the engaging recess 45 during the interrupting of transmission of a drive power of the transmission apparatus 18 Therefore, the outer end 47 of the spiral spring 46 is quickly and surely detached from the engaging recess 45 of the spring catcher 43 to remove the urging force exhibited by the spiral spring 46.

### (The Second Embodiment)

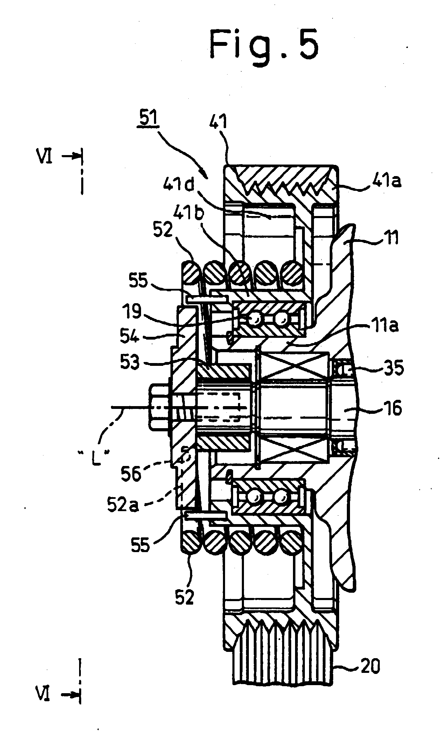

The description of the drive power transmission apparatus according to the second embodiment of the present invention will be provided hereinbelow with reference to Figs. 5 through 8. It should be understood that the same reference numerals, as in the first embodiment of Figs. 1 through 4, designate the same or like elements.

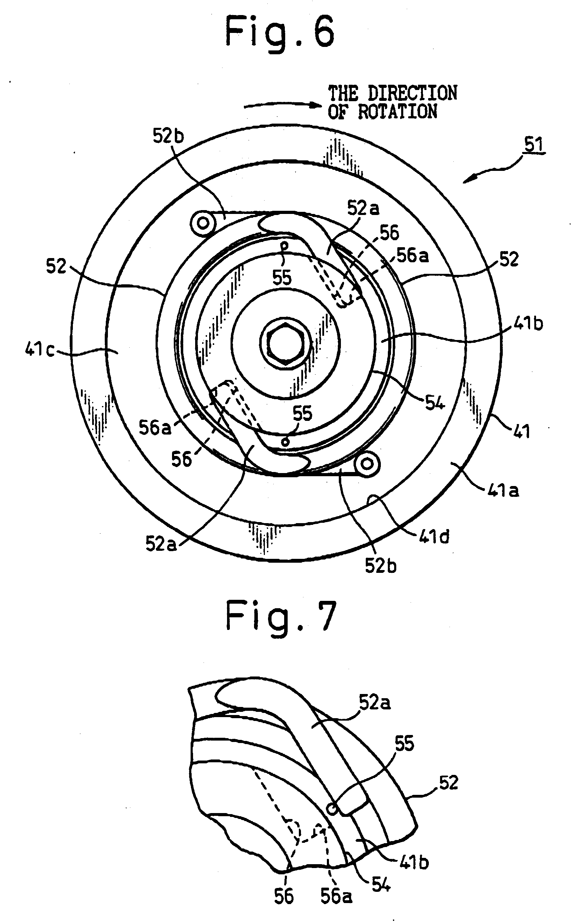

Referring to Figs. 5 and 6, the drive power transmission apparatus according to the second embodiment is formed as a belt-pulley type transmission apparatus 51 suitable for being incorporated in a frontmost end of a drive shaft 16 of a refrigerant compressor having a front housing 11 and a boss portion 11a integrally formed in a front part of the front housing 11. The belt-pulley type transmission apparatus 51 having a central axis "L" thereof includes a coil spring assembly formed as a torsional spring means functioning as an elastic means and a first connecting member. The coil spring assembly contains therein two identical coil spring elements 52 coaxially combined together. Each of the two coil spring elements 52 has two front and rear ends 52a and 52b. The two coil spring elements 52 are arranged so as to be circumferentially shifted 180 degrees from one another around in inner cylindrical member 41b of a rotor element 41 within an annular chamber 41d of the rotor element 41, and the front and rear ends 52a and 52b of one of the coil springs 52 are positioned to be spaced 180 degrees from those of the other of the coil spring elements 52 about the central axis "L" of the belt-pulley type transmission apparatus 51 while being held in parallel with one another as best shown in Fig. 6. Each of the coil spring elements 52 is coiled in a condition such that when the coil spring elements 52 are assembled in a later-described manner, they are torsionally uncoiled gradually in response to a rotation of the belt-pulley type transmission apparatus 51.

The rear ends 52b of the coil spring elements 52 are fixed to an annular rib member 41c of the rotor element 41 (the first rotating element), and the front ends 52a of the coil spring elements 52 are arranged to project inward of the coil spring elements 52. Further, the front ends 52a are disposed to be inclined radially inward with respect to the rotating direction of the belt-pulley type transmission apparatus 51.

A bush member 53 is fixedly mounted and fitted around a frontmost end of the drive shaft 16. A flange member 54 functioning as a second connecting member is fixed to the drive shaft 16 on the front side of the bush member 53. The bush member 53 and the flange member 54 are rotatable together with the drive shaft 16, and these three elements 53, 54 and 16 constitute a second rotating element of the belt-pulley type transmission apparatus 51. A pair of engaging recesses 56 are formed in a rear end face of the flange member 54 and are arranged to be shifted 180 degrees from one another in a circumferential direction about the central axis "L" Each engaging recess 56 opens in a radially outward direction but is closed on the axially front side thereof. The engaging recess 56 is provided with an engaging end face 56a extending radially with respect to the center of the flange member 54. Each coil spring element 52 is arranged so that the front end 52a thereof is inserted into one of the engaging recess 56. Thus, the end face of the front end 52a of each coil spring element 52 is in press-contact with the engaging end face 56a of the associated engaging recess 36. Therefore, the rotor element 41 is operatively engaged with the flange member 54 via the two coil spring elements 52 so as to be able to transmit a drive power from the rotor element 41 to the drive shaft 16.

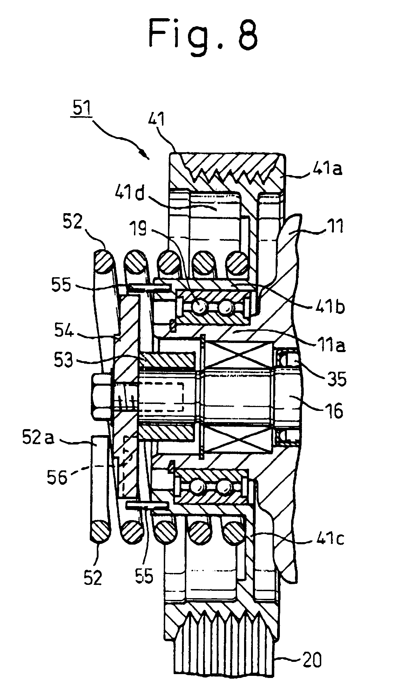

Figure 8 illustrates the coil spring elements 52 left in a free condition. In the free condition shown in Fig. 8, the front ends 52a of the coil spring elements 52 are axially extended frontward from the flange member 54. Therefore, when the belt-pulley type transmission apparatus 51 is assembled onto the drive shaft 16, the coil spring elements 52 are compressed to a condition shown in Fig. 5 where the coil spring element 52 are moved rearward to respective positions located on the rear side of the flange member 54. The front ends 52a of the respective coil spring elements 52 are engaged in the engaging recesses 56 of the flange member 54 as shown in Fig. 6. The compressed coil spring elements 52 functions as both an elastic means and an urging means as stated in the accompanying claims.

A pair of pins 55, which will be referred to as detaching pins hereinbelow, are secured to a front end face of the inner cylindrical member 41b of the rotor element 41. The detaching pins 55 function as means for removing an urging force exhibited by the urging means. In the second embodiment, the pair of detaching pins 55 are arranged to be shifted 180 degrees from one another about the central axis "L". Each detaching pin 55 is disposed to project into a space between a pin portion adjacent to the front end 52a of one of the coil spring elements 52 and the outer circumference of the flange member 54. Further, the position of each of the two detaching pins 55 about the central axis "L" is determined so that the detaching pin 55 is separated from the front end 52a of the associated coil spring element 52 by a given distance in a direction reverse to the rotating direction of the belt-pulley type transmission apparatus 51.

When the belt-pulley type transmission apparatus 51 is in operation, the coil spring elements 52 are torsionally moved in the uncoiled direction thereof by a load torque appearing in the drive shaft 16 in response to the transmission of a drive power from a drive power source (the vehicle engine) to the drive shaft 16. Thus, the coil diameter of the uncoiled coil spring elements 52 increases so that the front ends 52a thereof are forced to move outward from the position in the engaging recesses 56 under the guidance of the engaging end faces 56a as shown in Fig. 7.

When the load torque increases over a predetermined limiting torque due to an unpredictable cause of the compressor (the drive power-receiving unit), an amount of torsional movement of the coil spring elements 52 increases so that the coil diameter of the two coil spring elements 52 becomes very large. Therefore, the front ends 52a of the coil spring elements 52 are disengaged from the associated engaging recesses 56. Accordingly, the coil spring elements 52 are detached from the flange member 54 and are allowed to axially move frontward and to be restored to the position shown in Fig. 8 where the front ends 52a of the coil spring elements 52 are positioned on the front side of the front end of the flange member 54. Due to the restoration of the coil spring elements 52 to the position shown in Fig. 8, the coil diameter of the two coil spring elements 52 are reduced to the diameter of the coil spring elements 52 at the free condition thereof. Further, when the front ends 52a of the coil spring elements 52 are moved to the position located on the front side of the flange member 54, the front ends 52a cannot be re-engaged with the engaging recesses 56 of the flange member 54. An operative engagement of the rotor element 41 with the drive shaft 16 via the coil spring elements 52 and the flange member 54 is interrupted so that transmission of a drive power from the drive power source (the vehicle engine) to the drive-power-receiving unit (the refrigerant compressor) is completely interrupted. Therefore, an excessive load torque disappears in the drive-power-receiving unit.

It should be noted that when the belt-pulley type transmission apparatus 51 is assembled on the drive shaft 16 of the refrigerant compressor, the front ends 52a of the coil spring elements 52 forming a part of a drive-power transmitting line are in a press-contact with the engaging faces 56a of the engaging recesses 56. Therefore, a large frictional force appears between the frontmost end faces of the front ends 52a of the respective coil spring elements 52 and the engaging faces 56a of the engaging recesses 56, so as to prevent the front ends 52a of the coil spring elements 52 from being smoothly moved along the engaging faces 56a of the engaging recesses 56 when a load torque appearing in the refrigerant compressor increases. Thus, even if the coil diameter of the coil spring elements 52 is increased due to the torsional movement of the coil spring elements 52 in the uncoiled direction, the front ends 52a of the coil spring elements 52 might not be immediately disengaged from the engaging recesses 56, and an occurrence of the disengagement may be delayed when the load torque exceeds the predetermined limiting torque.

Nevertheless, in the second embodiment of the present invention, the detaching pins 55 are attached to the inner cylindrical member 41b of the rotor element 41. Namely, the detaching pins 55 are arranged so as to gradually approach the front ends 52a of the coil spring elements 52 due to a relative rotation between the rotor element 41 and the drive shaft 16 caused by the torsional movement of the coil spring elements 52 when a load torque increases. Thus, when the load torque increases to over the predetermined limiting torque so as to increase an amount of torsional movement of the coil spring elements 52, an amount of the relative rotation between the rotor element 41 and the drive shaft 16 is sufficiently increased so that the detaching pins 55 come into press-contact with the front ends 52a of the coil spring elements 52. Namely, the detaching pins 55 positively assist the front ends 52a of the coil spring elements 52 to be quickly and surely disengaged from the engaging recesses 56 of the flange member 54. Thus, the delay in the interrupting operation of the belt-pulley type transmission apparatus 51 can be prevented.

It should be appreciated that the belt-pulley type transmission apparatus 51 of the second embodiment of the present invention can enjoy the same advantages as the afore-mentioned advantages (1) through (5) of the first embodiment of the present invention. Further, additional advantages as set forth below can be obtained by the second embodiment.
(1') The coil spring elements 52 are assembled in the belt-pulley type transmission apparatus 51 after being compressed. Thus, the coil spring elements 52 can function to urge the drive shaft 16 in the axially frontward via the flange member 54 and the bush member 53. Therefore, when the belt-pulley type transmission apparatus 51 is employed instead of the belt-pulley type transmission apparatus 18 of the first embodiment, it is possible to omit the pressing spring 38 and the thrust bearing 37 interposed between the spring 38 and the rear end of the drive shaft 16. Accordingly, a reduction in the number of structural elements indispensable for constructing a refrigerant compressor can be achieved. Consequently, a reduction in the manufacturing cost as well as a simplification of the internal construction of the compressor can be realized.
(2') Since the two or more coil spring elements are combined together to form the coil spring assembly, the respective coil spring elements can physically support one another. Thus, the coil spring assembly can constantly maintain a physically rigid condition, and accordingly, the operation of the belt-pulley type transmission apparatus 51 can be constantly stable and reliable.

### (The Third Embodiment)

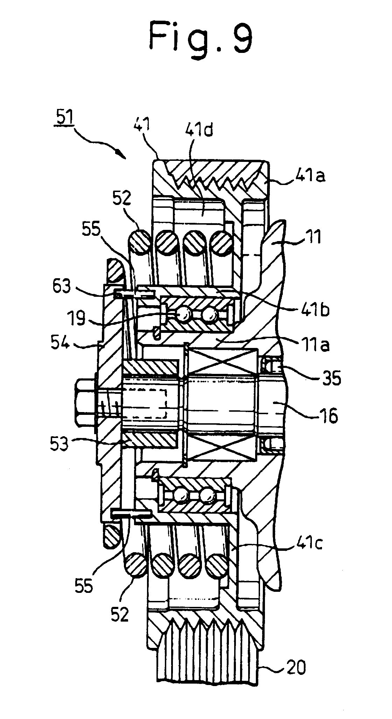

A drive power transmission apparatus according to the third embodiment of the present invention will be described hereinbelow with reference to Figs. 9 through 12B.

The drive power transmission apparatus of the third embodiment is formed as a belt-pulley type transmission apparatus and is incorporated in a front end portion of a drive shaft of a refrigerant compressor. Accordingly, the same reference numerals as those of the second embodiment designate the same or like portions or elements.

The belt-pulley type transmission apparatus of the third embodiment is very different from that of the second embodiment in that a torsional movement of a coil spring assembly having a plurality of coil spring elements 52, e.g., two coil spring elements, in a direction reverse to the rotating direction of the belt-pulley type transmission apparatus 51 is not used for the interrupting operation of the drive power transmission. Further, respective front ends 52a of the two coil spring elements 52 are engaged with a flange member 54 in a manner different from the manner employed in the second embodiment. Thus, the function of the coil spring elements 52 to urge themselves toward a position where the front ends 52a thereof are engaged with the flange member 54 is achieved in a way different from that of the coil spring element 52 of the second embodiment. Furthermore, the operation of a plurality of detaching pins 55 is different from that of the second embodiment.

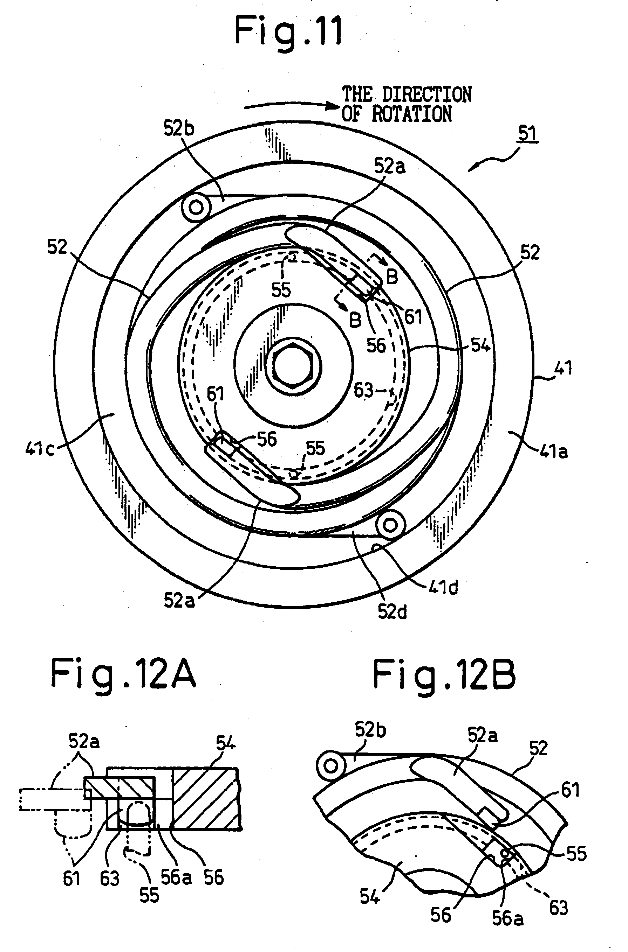

Referring first to Figs. 11 and 12A, a portion of the front end 52a of each of the two coil spring element 52 is divided into two outer and inner pieces in which the inner piece is bent to form an engaging end 61 projecting rearward.

The flange member 54 is provided with a plurality (two in this embodiment) of engaging recesses 56 formed in a front end face thereof, and the two engaging recesses are arranged to be spaced 180 degrees away from one another about the central axis "L" of the belt-pulley type transmission apparatus 51. Each of the engaging recesses 56 is formed so as to open in an axial direction parallel to the axis of rotation of the drive shaft 16. Nevertheless, each engaging recess 56 is closed in the radial direction of the flange member 54. Each engaging recess 56 is provided with an engaging end face 56a formed so as to extend axially. Thus, the engaging end 61 of the front end 52a of each coil spring element 52 is engaged in the associated engaging recess 56 of the flange member 54 and is in press-contact with the engaging end face 56a. The rear ends 52b of the two coil spring elements 52 are fixed to an annular rib member 41c of the rotor element 41 in the same manner as the coil spring elements 52 of the second embodiment. Thus, the coil spring assembly including the two coil spring elements 52 is able to transmit a drive power from a drive power source, e.g., a vehicle engine.

The flange member 54 is further provided with an annular groove 63 formed in a rear end face thereof so as to extend circularly about the central axis "L". The annular groove 63 is arranged at an outer peripheral portion of the rear face so as to intersect with the engaging recesses 56. The detaching pins 55 attached to an inner cylindrical member 41b of the rotor element 41 extend to enter the annular groove 63.

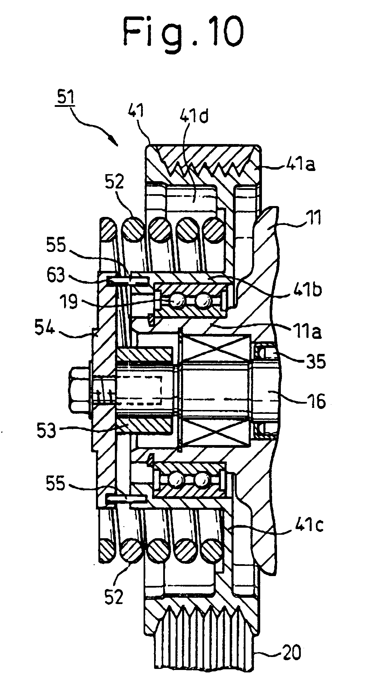

Figures 10 and 12B illustrate the coil spring elements 52 which are kept free so that the front ends 52a thereof are not engaged in the engaging recesses 56 of the flange member 54. Therefore, the front ends 52a are positioned radially outside the outer periphery of the flange member 54.

When the belt-pulley type transmission apparatus 51 is assembled onto the drive shaft 16, front portions of the respective coil spring elements 52 which include the front ends 52a are elastically moved radially inward, and the engaging ends 61 of the front ends 52a are forcedly engaged in the engaging recesses 56 of the flange member 54 as shown in Figs. 9, 11 and 12A. The engaging ends 61 of the front ends enter the annular groove 63.

When the belt-pulley type transmission apparatus 51 is in operation to transmit a drive power from the vehicle engine to the refrigerant compressor, the coil spring elements 52 are torsionally moved by a load torque appearing in the refrigerant compressor to cause a relative rotation between the rotor element 41 and the drive shaft 16. Thus, the detaching pins 55 come close to the engaging ends 61 of the front ends 52a of the coil spring elements 52 within the annular groove 63 of the flange member 54 due to an increase in an amount of the relative rotation between the rotor element 41 and the drive shaft 16. When the load torque increases over a predetermined limiting torque, the detaching pins 55 are pressed against the engaging ends 61 of the front ends 52a to cause the front portions of the coil spring elements 52 around the front ends 52a to be bent axially frontward and accordingly, the engaging ends 61 of the front ends 52a of the respective coil spring elements 52 are gradually detached from the engaging end faces 56a and are eventually moved away from the engaging recesses 56 of the flange member 54. Therefore, the coil spring elements 52 are restored to the free condition as shown in Figs. 10 and 12B. When the coil spring elements 52 are made free, the engaging ends 61 of the front ends 52a are moved radially outward so as to come out of contact with the detaching pins 55. At this stage, although the coil spring elements 52 are slightly axially moved back toward the annular rib member 41b of the rotor element 41, the front ends 52a of the coil spring elements 52 radially moved outward relative to the flange member 54 do not come into re-engagement with the engaging recesses 56 of the flange member 54. Therefore, the rotor element 41 and the coil spring elements 52 are disconnected from the flange member 54 fixed to the drive shaft 16, and therefore, transmission of a drive power from the drive power source (the vehicle engine) to the drive-power-receiving unit (the refrigerant compressor) is interrupted.

It should be understood that, according to the described third embodiment of the invention, the identical advantages to the advantages (1) through (5) of the first embodiment and (2') of the second embodiment can be obtained.

### (The Fourth Embodiment)

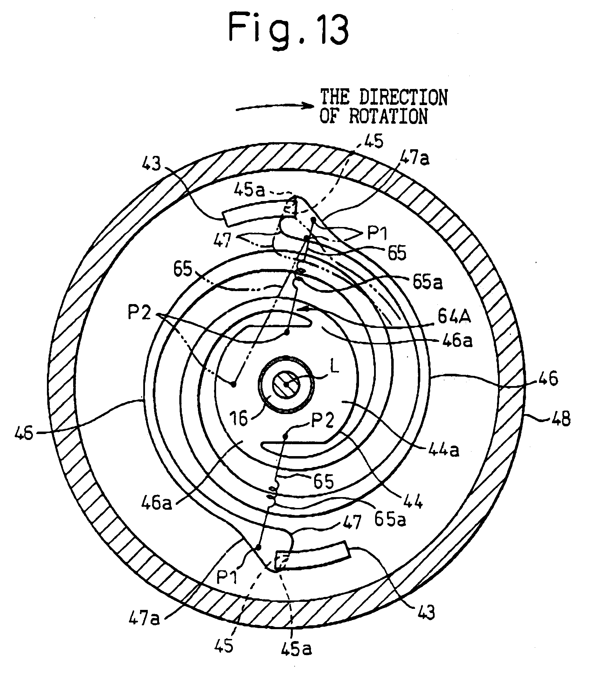

Figure 13 illustrates a drive power transmission apparatus according to the fourth embodiment of the present invention, which can be considered to be a modification of the belt-pulley type transmission apparatus 18 of the first embodiment. Therefore, the description below will be provided to clarify the difference between the first and fourth embodiments.

In Fig. 13, the belt-pulley type transmission apparatus of the fourth embodiment is provided with a bridging means 64A instead of the elongated projections 48a of the first embodiment. The bridging means 64A are made of steel wires or the like, and include a pair of wire members 65 arranged in substantially diametrically symmetrical positions. Each wire member 65 of the bridging means 64A is provided with a first connecting position P1 fixed to a portion of each spiral spring element 46, i.e., a portion adjacent to the outer end 47 of the spiral spring element 46 and a second connecting position P2 fixed to a portion of the flanged bush member 44 which is located on the front face and spaced a given distance from the central axis "L" of the belt-pulley transmission apparatus 18. The first and second connecting positions P1 and P2 of each wire member 65 of the bridging means 64A are determined to have a positional relationship in which when a relative rotation between the rotor element 41 and the drive shaft 16 occurs due to an increase in a load torque appearing in the drive-power-receiving unit (the refrigerant compressor), the space between the first and second connecting positions P1 and P2 is increased. The connecting positions P2 of the wire members 65 of the bridging means 64A are set at positions close to the central axis "L" of the rotor element 41, and the positions P1 of the wire members 65 of the bridging means 64A are set at positions spaced from the central axis "L".

The wire members 65 of the bridging means 64A are provided with a coiled portion 65a formed at a substantially middle position of each wire member, respectively. The coiled portion 65a of each wire member 65 of the bridging means 64A is provided to permit a predetermined amount of a linear stretching of the wire member 65.

During the drive-power transmitting operation of the belt-pulley transmission apparatus of the present fourth embodiment, when the spiral spring 46 is torsionally moved due to a load torque appearing in the refrigerant compressor, a relative rotation between the rotor element 41 and the drive shaft 16 of the refrigerant compressor occurs. Thus, the positions of the respective spiral springs 46, at which the connecting positions P1 and P2 of the bridging means 64A are fixed, are separated from one another to cause a stretching of the wire members 65 of the bridging means 64A.

When the load torque is smaller than the predetermined limiting torque, an amount of the relative rotation between the rotor element 41 and the drive shaft 16 is small. Therefore, the wire members 65 of the bridging means 64A are gradually stretched linearly at the coiled portions 65a to permit the separation of the two connecting positions P1 and P2. Thus, the bridging means 64A does not apply a pulling force to the outer ends 47 of the spiral springs 46. Accordingly, the outer ends 47 of the spiral springs 46 maintain the engagement in the engaging recesses 45 of the spring catchers 43 due to an urging force exhibited by the spiral springs 46 per se. Namely, the outer ends 47 of the spiral springs 46 are not disengaged from the spring catchers 43.

Nevertheless, when the load torque appearing in the refrigerant compressor exceeds the predetermined limiting torque due to an unpredictable cause, such excessive load torque causes a large increase in an amount of relative rotation between the rotor element 41 and the drive shaft 16. Thus, the space between the connecting positions P1 and P2 of each wire member 65 of the bridging means 64A is greatly increased due to a large torsional movement of the spiral springs 46. As a result, the wire members 65 of the bridging means 64A are linearly stretched to entirely extend the coiled portions 65a thereof. When torsional movement of the spiral springs 46 further increases until an amount of the linear stretching of the respective wire members 65 of the bridging means 64A reaches a permissible limiting amount, a pulling force is applied from the flange portion 44a to the outer ends 47 of the spiral springs 46 via the stretched bridging means 64A. Therefore, the outer ends 47 of the spiral springs 46 are deformed so as to be disengaged from the engaging recesses 45 of the spring catchers 43. More specifically, the wire members 65 of the bridging means 64A are basically provided to maintain a given constant distance between the two connecting positions P1 and P2, irrespective of a change in the amount of load torque. However, when the amount of load torque exceeds the predetermined limiting torque, the wire members 65 of the bridging means 64A are forcedly stretched from a normal state shown by a solid line in Fig. 13 to a longest state shown by a broken line in Fig. 13 and, accordingly, the outer ends 47 of the spiral springs 46 are urged to be eventually disengaged from the engaging recesses 45 of the spring catchers 43. When the outer ends 47 of the spiral springs 46 are disengaged from the engaging recesses 45 of the spring catchers 43, the spiral springs 46 are moved axially so as to prevent the outer ends 47 from being re-engaged in the engaging recesses 45 of the spring catchers 43 of the stop member 42 of the rotor element 41. Thus, the transmission of a drive power from the drive power source to the drive-power-receiving unit is interrupted.

According to the fourth embodiment of the present invention, the same advantages as the afore-mentioned advantages (1) through (4), and (6) of the first embodiment can be obtained. Further, advantages as set forth below can also be obtained by the present fourth embodiment.
(1'') The connecting position P2 of the wire member 65 is set at a position close to the central axis "L" of the belt-pulley transmission apparatus, and the other connecting position P1 is set at a position spaced from the central axis "L". The connecting position P2 is selected to be in registration with a direction in which the outer end 47 of the spiral spring 46 is disengaged from the engaging recess 45 of the spring catcher 43. Therefore, when the transmission of a drive power should be interrupted, the outer end 47 of the spiral spring 46 can be smoothly disengaged from the engaging recess 45 of the spring catcher 43 to ensure a quick and reliable removal of force urging the outer end 47 of the spiral spring 46 toward an engagement in the engaging recess 45. In the fourth embodiment of the present invention, although provision of the inclined engaging faces 45a of the engaging recesses 45 is not indispensable, the inclined engaging end faces 45a can contribute to a quick and smooth removal of the above-mentioned urging force applied to the outer end 47 of the spiral spring 46. This is because when a relative rotation of the rotor element 41 and the drive shaft 16 occurs due to an increase in a load torque appearing in the refrigerant compressor, the second connecting position P2 is moved from its original position to a different position which is separated from the original position in a direction reverse to the rotating direction of the rotor element 41 and in a direction in which the outer end 47 is disengaged from the engaging recess 45, with respect to the first connecting position P1.
(2'') The wire members 65 of the bridging means 64A are provided with coiled portions 65a at their middle portions. Thus, an entire length of stretch permitted for each wire member 65 of the bridging means 64A from its original condition in which the coiled portion 65a is held in the most stretched condition in which the coiled portion 65a is completely uncoiled can be easily adjusted by adjustably changing the number of coils of the coiled portion 65a. Thus, it is possible to adjustably determine a predetermined limiting toque for a load torque which determines a condition for interrupting transmission of a drive power.
(3'') The bridging means 64A is made of wire members, e.g., steel wires. Therefore, the coiled portion 65a can be easily formed in a specified portion of each wire member 65. The coiled portion 65a of each wire member 65 of the bridging means 64A may be replaced with a stretchable wire portion formed as a zigzag-shape wire portion or a crank-shape wire portion as required.

### (The Fifth Embodiment)

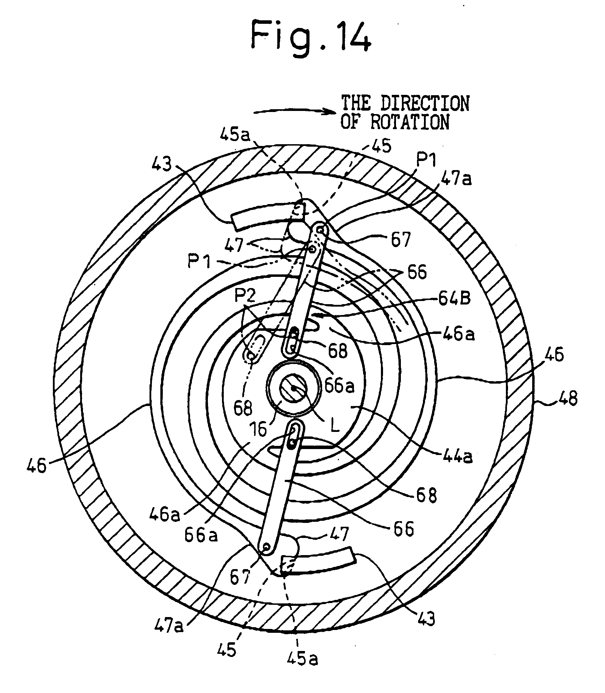

Figure 14 illustrates a drive power transmission apparatus according to a fifth embodiment of the present invention which is formed as a belt-pulley transmission apparatus modified from that of the fourth embodiment.

Referring to Fig. 14, the belt-pulley transmission apparatus of the fifth embodiment is different from that of the fourth embodiment in that a bridging means 64B including a pair of bar-like plate members 66, each being made of a steel plate material. An end of each bar-like plate member 66 is connected to the outer end 47 of the spiral spring 46 at a first connecting position P1, via a pivotal pin 67. Each bar-like plate member 66 is provided with an elongated guide slot 66a formed in the other end thereof. The elongated guide slot 66a has a predetermined length in a longitudinal direction of each bar-like plate member 66. A guide pin 68 is fixed to the flange portion 44a at a second connecting position P2 and is located in the elongated guide slot 66a of each bar-like plate member 66. Thus, each bar-like plate member 66 of the bridging means 64B is allowed to slidably move by an amount determined by the predetermined longitudinal length of the guide slot 66a with respect to the guide pin 68. Namely, a combination of the guide slot 66a and the guide pin 68 of each bar-like plate member 66a performs a function identical to the stretchable function of the coiled portion 65a of the wire member 65 of the fourth embodiment.

In the fifth embodiment, when a relative rotation between the rotor element 41 and the drive shaft 16 occurs due to a load torque appearing in the refrigerant compressor, the first connecting position P1 of each spiral spring 46 is moved to be separated from the second connecting position P2 of the flange portion 44a due to a torsional movement of the spiral spring 46. When the load torque is smaller than the predetermined limiting torque, an amount of the relative rotation between the rotor element 41 and the drive shaft 16 is small. Therefore, the bar-like plate members 66 of the bridging means 64B can move via the guide slots 66a under the guidance of the guide pins 68 in a direction in which a longitudinal space between the pivotal pin 67 and the guide pin 68 is increased.

When the load torque of the compressor increases to over the predetermined limiting torque due to an unpredictable cause, a large amount of relative rotation between the rotor element 41 and the drive shaft 16 causes a large increase in the torsional movement of the spiral spring 46 which in turn causes a further movement of each bar-like plate member 66 of the bridging means 64B until the guide pin 68 abuts against an inner end of the guide slot 66a as shown by broken lines in Fig. 14. When the abutting of the guide pins 68 against the inner ends of the guide slots 66a of the bar-like plate members 66 occurs, the bar-like plate members 66 prevent a further increase in the torsional movement of the spiral springs 46 against the flange portion 44a of the flanged bush member 44. Thus, the outer ends 47 of the spiral springs 46 are pulled inwardly by the bridging means 64B. Accordingly, the outer ends 47 of the spiral springs 46 are disengaged from the engaging recesses 45 of the spring catchers 43. Therefore, the spiral springs 46 are allowed to axially move back to a position where the outer ends 47 of the spiral springs 46 cannot be re-engaged in the spring catchers 43 of the stop member 42 of the rotor element 41. Consequently, an interruption of transmission of a drive power from the drive power source (the vehicle engine) to the drive-power-receiving unit (the refrigerant compressor) is achieved.

According to the belt-pulley transmission apparatus of the fifth embodiment, advantages identical with the advantages (1'') and (2'') of the fourth embodiment can be obtained. Further, two additional advantages as set forth below can be obtained.
(1''') The bridging means 64B made of a bar-like plate member 66 may be more rigid compared with the bridging means 64A made of a wire member 65. Thus, the physical durability of the bridging means 64B can be large to result in an increase in the operational reliability in the torque limiting function of the belt-pulley type transmission apparatus.
(2''') During the torsional movement of the spiral springs 46, the bar-like plate members 66 of the bridging means 64b are permitted to move via the guide slots 66a with respect to the guide pins 68. Thus, no load is applied to the bridging means 64B during the torsional movement of the spiral springs 46 with respect to the flange portions 44a of the flanged bush member 44. Thus, the long operational life of the bridging means 64B can be ensured.

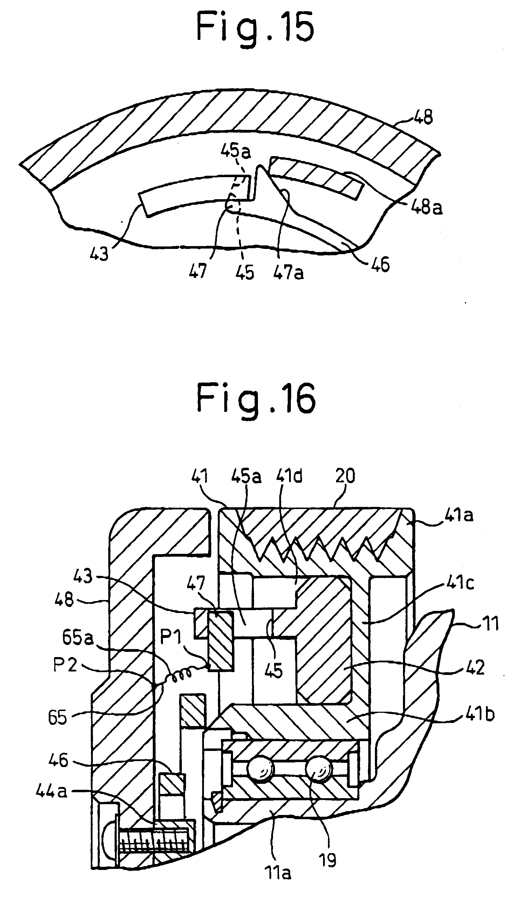

The drive power transmission apparatus according to the present invention can accurately and surely transmit a drive power from a drive power source to a drive-power-receiving unit and can prevent an unpredictable interruption of transmission of a drive power during the high speed rotation of the drive power transmission apparatus. Further, when a load torque exceeds a predetermined limiting torque, the drive power transmission apparatus of the present invention accurately and reliably operates so as interrupt transmission of a drive power to thereby allow the excessive load torque to disappear in the drive-power-receiving unit. The drive power transmission apparatus according to the present invention may be further embodied by modifying the described various embodiments as set forth below.
(i) As shown in Fig. 15, the shape of the outer end 47 of each spiral spring 46 of the belt-pulley type transmission apparatus 18 may be changed to a bifurcated-end-shape having an enlarged outer curved face portion 47a. Thus, the elongated projection 48a to detaching the outer end 47 from the engaging recess 45 may be moved to a position radially outwardly separated from the central axis "L" of the belt-pulley type transmission apparatus.
(ii) As shown in Fig. 16, the second connecting position P2 of the wire member 65 may be connected to a portion of the disconnecting plate 48. Further, the second position P2 of the fifth embodiment may be similarly arranged in the disconnecting plate 48.
(iii) In the first embodiment, the spiral spring 46 may be modified so as to have a conical shape when it is free. Then, the conical spiral spring is compressed and accommodated between the first and second rotating units to constitute an elastic means as well as an urging means. When the conical spiral spring is used, the spring catcher 43 must be modified so that the engaging recess 45 can hold the outer end 47 of the compressed spiral spring. Then, the afore-mentioned advantage (1') of the second embodiment can be similarly enjoyed.
(iv) In the second embodiment, the coil spring 52 may be modified so that it is accommodated between the rotor element 41 and the flange member 54 in its free condition. The free condition of the coil spring 52 is the condition as shown in Fig. 5, and the front end 52a of the coil spring 52 will be positioned on the rear side of the flange member 54. The flange member 54 must then be modified so that the engaging recesses 56 are formed in the front face thereof so as to receive therein the front ends 52a of the coil springs 52 when the coil springs 52 are axially extended and assembled between the flange member 54 and the rotor element 41.
(v) In the described first through fifth embodiments, the number of springs 46 and 52 may be increased or decreased. When a single spring is employed, the entire construction of the belt-pulley type transmission apparatus 18 and 51 will be simplified. If three or more springs are employed, it will be possible to prevent the drive shaft 16 from being inclined during the transmission of a drive power.
(vi) In the first through third embodiments, one of the pair of elongated projections 48a or detaching pins 55 may be arranged so as to come into a press-contact with the associated spiral or coil spring 46 or 52 to thereby detach the spring 46 or 52 from the second connecting member 42 or 54 at a time earlier than the time when the other of the pair of elongated projections 48a or detaching pins 55 come into press-contact with the associated spiral or coil spring 46 or 52. To this end, the elongated projections 48a or detaching pins 55 may be arranged non-equidistantly around the central axis "L". Then, the detaching of one of the spiral or coil springs 46 or 52 from the second connecting member 42 or 54 initially occurs, and subsequently the detaching of the other of the spiral or coil springs 46 or 52 from the second connecting member 42 or 54 occurs. This time discrepancy in the timing of the detaching of the spiral or coil springs 46 or 52 will enable the springs 46 or 52 to be easily detached from the second connecting member. Consequently, when a load torque exceeds the predetermined limiting torque, transmission of a drive power can be quickly interrupted.
(vii) In the fourth or fifth embodiment, the connecting positions P2 may be shifted to the positions shown in Figs. 13 or 14 to positions arranged adjacent to the inner ends 46a of the spiral spring 46. Then, the second connecting positions P2 can be still separated from the first connecting positions P1 in response to an increase in an relative rotation of the rotor element 41 and the drive shaft 16, to promote the interruption of the drive power transmission when the load torque exceeds the predetermined limiting torque.
(viii) In the fourth or fifth embodiments, the bridging means 64A or 64B may be modified so that a part thereof or the entire portion thereof is made of resilient material such synthetic rubber material in order to omit the coiled portion 65a or the combination of the guide slot 66a and the guide pin 68. Then, the bridging means 64A or 64B will be able to exhibit the same function as the coiled portion 65a or the combination of the guide slot 66a and the guide pin 68 due to the resiliency thereof.
(ix) In the fifth embodiment, the bar-like plate member 66 may be modified so that the elongated guide slot 68 is formed in the outer end thereof adjacent to the outer end 47 of the spiral spring 46. Then, the guide pin 68 will be fixed to the first connecting position P1, and the pivotal pin 67 will be fixed to the connecting position P2. The operation of the modified bar-like plate member can be identical with the original bar-like plate member 66.
(x) In the first, fourth and fifth embodiment, the outer end 47 of each spiral spring 46 is formed to be disengaged from the engaging recess 45 of the spring catcher 43 by a radial inward movement of the outer end 47 of the spiral spring 46. Nevertheless, a modification may be made so that a radial outward movement of the outer end 47 of the spiral spring 46 permits the outer end 47 to be disengaged from the engaging recess 45 of the spring catcher 43. Then, for example, in the fifth embodiment, the second connecting position P2 is arranged to have such a positional relationship with the connecting position P1 that when a relative rotation between the rotor element 41 and the drive shaft 16 occurs due to an increase in a load torque appearing in the refrigerant compressor, the connecting position P2 approaches the first connecting position P1. Then, the bridging moans 64B will act to prevent the approaching of the first and second connecting positions P1 and P2 and to press the outer end 47 of the spiral spring 46 outward from the engaging recess 45 of the spring catcher 43 when the load torque exceeds the predetermined limiting torque. Thus, the outer end 47 of each spiral spring 46 will be disengaged from the spring catcher 43 to interrupt transmission of a drive power.
(xi) In each of the first through fifth embodiments, the belt-pulley type transmission apparatus 18 or 51 may be provided with a solenoid clutch. For example, in the first embodiment of Figs. 1 through 4, the annular chamber 41d of the rotor element 41 may be used for receiving a solenoid therein.
(xii) The described belt-pulley type transmission apparatus 18 or 51 may be incorporated in various refrigerant compressors which are different from the illustrated swash plate type refrigerant compressor to constitute a drive power transmission apparatus between a drive power source and the compressors. For example, the transmission apparatus 18 or 51 may be incorporated into a wobble plate type refrigerant compressor, a wave-cam type refrigerant compressor, and a double-headed piston type refrigerant compressor. Further, the belt-pulley type transmission apparatus 18 or 51 may be incorporated into a scroll type compressor or a vane type compressor as required.
(xiii) The drive-power-receiving unit may be different from the described refrigerant compressor. For example, various auxiliary equipments for a motor vehicle such as hydraulic pump of a hydraulic power-steering equipment or an alternator.

It should be understood that although the present invention was described in connection with several preferred embodiments, many changes and modifications will occur to a person skilled in the art without departing from the scope and spirit of the present invention as claimed in the accompanying claims.

## Claims

1. A drive power transmission apparatus for detachably connecting a first rotating element connected to a drive power source with a second rotating element connected to a drive-power-receiving unit to transmit a drive power from said first rotating element to said second rotating element, comprising:
a first connecting member incorporated in one of said first and second rotating elements;
a second connecting member incorporated in the other of said first and second rotating elements, said second connecting member permitting said first connecting member to be detachably engaged therewith;
an elastic means arranged between said first and second rotating elements to be torsionally moved by a load torque appearing in said drive-power-receiving unit during transmission of the drive power to thereby permit a relative rotation between said first and second rotating elements;
an urging means for exhibiting a force to urge said first connecting member toward a position where, when said first connecting member is detached from said second connecting member, said first connecting member is not permitted to be re-engaged with said second connecting member; and
means for removing the urging force of said urging means from said first connecting member in response to a relative movement between said first and second connecting members which is caused by said relative rotation between said first and second rotating elements when the load torque increases over a predetermined limiting torque.

2. The drive power transmission apparatus according to claim 1, wherein said elastic means comprises a torsional spring torsionally movably arranged between said first and second rotating elements.

3. The drive power transmission apparatus according to claim 2, wherein said torsional spring is elastically deformed and accommodated between said first and second rotating elements to concurrently function both as said urging moans and said elastic means.

4. The drive power transmission apparatus according to claim 2, wherein said torsional spring is integral with one of said first and second connecting members, and the other of said first and second connecting members is detachably engaged with a first end of said torsional spring, a second end of said torsional spring being arranged to be non-rotatable with respect to one of said first and second rotating elements, which incorporates therein said connecting member integral with said torsional spring.

5. The drive power transmission apparatus according to claim 4, wherein said first connecting member is connected to said second rotating element, and said second connecting member is integrally connected to said first rotating element, and wherein said torsional spring is integral with said first connecting member and is disengagebly engaged with said second connecting member.

6. The drive power transmission apparatus according to claim 5, wherein said second connecting member connected to said first rotating element is provided with a mechanical projection capable of functioning as said means for removing the urging force of said urging means, said mechanical projection being arranged to be pressed against said torsional spring due to a relative rotation between said first and second rotating elements, so that said first end of said torsional spring is moved relative to said second connecting member until the urging force of said urging means is removed when said load torque increases over said predetermined limiting torque.

7. The drive power transmission apparatus according to claim 5, wherein said means for removing the urging force of said urging means comprises a bridging means for providing an interconnection between first and second positions provided in said torsional spring, said first position being disposed adjacent to said first end of said torsional spring and said second position coming nearer to and leaving from said first position due to the relative rotation of said first and second rotating elements, said bridging means preventing said second position from moving toward and away from said first position due to the relative rotation of said first and second rotating elements when said load torque increases to more than said predetermined limiting torque, so that said first end of said torsional spring is disengaged from said second connecting member to thereby remove said urging force of said urging means.

8. The drive power transmission apparatus according to claim 7, wherein said second position is determined as a position spaced apart from said first position in a direction in which said first end of said torsional spring is moved.

9. The drive power transmission apparatus according to claim 7, wherein said second position is determined as a position disposed in said first connecting member integral with said torsional spring.

10. The drive power transmission apparatus according to claim 7, wherein said bridging means has means for allowing said first and second positions to make a change in a distance therebetween at a middle portion of said bridging means.

11. The drive power transmission apparatus according to claim 7, wherein said bridging means has means for allowing said first and second positions to make a change in a distance therebetween at a portion thereof where said bridging means is connected to one of said first and second positions of said torsional spring.

12. The drive power transmission apparatus according to claim 7, wherein said bridging means comprises a wire member.

13. The drive power transmission apparatus according to claim 12, wherein said wire member is a metallic wire member having a coiled portion functioning as means for allowing said first and second positions to make a change in a distance therebetween.

14. The drive power transmission apparatus according to claim 7, wherein said bridging means comprises a plate member in the form of a bar.

15. The drive power transmission apparatus according to claim 14, wherein said plate member of said bridging means is provided with an elongated guide slot formed therein in which a fixedly arranged guide pin is inserted, said elongated guide slot and said guide pin cooperating to function as means for allowing said first and second positions to make a change in a distance therebetween.

16. The drive power transmission apparatus according to claim 7, wherein said bridging means comprises a bar-like plate member made of an elastic material.

17. The drive power transmission apparatus according to claim 2, wherein said torsional spring comprises a spiral spring element.

18. The drive power transmission apparatus according to claim 2, wherein said torsional spring comprises a coil spring element.

19. The drive power transmission apparatus according to claim 2, wherein said elastic means comprises a plurality of torsional springs having first ends thereof arranged equidistantly around an axis of rotation of said first and second rotating elements and second ends thereof also arranged equidistantly around said axis of rotation of said first and second rotating elements, said first ends of said plurality of torsional springs being arranged to be detachably engaged with the other of said first and second connecting members, and said second ends of said plurality of torsional springs being arranged to be non-rotatable with respect to one of said first and second rotating elements, which incorporates therein said connecting member integral with said torsional springs.
